# EUROPEAN PATENT SPECIFICATION

(11) **EP 4 326 501 B1**
(45) Date of publication and mention of the grant of the patent: **22.10.2025**
(21) Application number: 22723478.8
(22) Date of filing: 22.04.2022
(51) Int. Cl.: B25J 15/06, A23G 3/54, B65D 25/00, B65D 85/36, B65D 85/60, B25J 15/08, A23G 3/56, B25J 11/00, A47F 3/00

(54) **METHOD AND DEVICE FOR PACKAGING A CONFECTIONERY PRODUCT IN A DISPLAY**
VERFAHREN UND VORRICHTUNG ZUM PACKEN EINES SÜSSWARENPRODUKTS IN EINEN AUSTELLUNGSSTÄNDER
PROCÉDÉ ET DISPOSITIF D'EMBALLAGE D'UN PRODUIT DE CONFISERIE DANS UN PRÉSENTOIR

(30) Priority: 23.04.2021 BE 202105315
(43) Date of publication of application: 28.02.2024
(73) Proprietor: C&B Logistics BV, 9160 Lokeren (BE)
(72) Inventor: PATYN, Luk, 9160 Lokeren (BE)
(74) Representative: Brantsandpatents bv
(86) International application number: PCT/IB2022/053764
(87) International publication number: WO 2022/224208

(56) References cited:
- WO-A1-2020/127562
- CN-A- 111 406 822
- DE-B3- 102007 031 847
- US-A- 1 966 734

## Description

### TECHNI CAL FI ELD

The invention relates to a method for packaging a confectionery product in a display by means of an automated gripping system. The invention also relates to a device for packaging confectionery products and to a display filled with one or more confectionery products.

### PRIOR ART

The use of robotic arms is used in various industries, mainly because they increase the efficiency of the production process and thus reduce labor costs. The widespread use of robotic arms is largely due to their versatility to perform various tasks. This versatility is achieved through the use of specific end effector attachments, such as grippers or other tools mounted on the end of the robotic arm. These end effector attachments are often specially designed to perform specialized tasks. Robotic arms are used, for example, to perform complex operations that require the highest degree of accuracy and precision, such as manufacturing printed circuit boards or computer chips. In other industries, robotic arms have replaced manual labor for tasks traditionally performed manually by humans, such as packing bottles into cases, painting cars on an assembly line, and many other similar tasks. All of these tasks can be performed through specifically designed end effector attachments.

Despite the many uses of robotic arms, there is still a need for a method and a device capable of handling delicate items requiring special handling, such as confectionery products with a holder and a fragile chocolate portion. Furthermore, in order to positively influence the customer's purchasing behavior, it is important that these confectionery products are presented upright in a display. Current automated methods and devices are not suitable for upright packaging of these fragile confectionery products. For the time being, this type of packaging is therefore done manually. In an industrialized setting, however, this means an additional cost, as well as a loss of efficiency. However, the automated methods that *are* known do not always meet current needs.

EP 2 108 589, for example, describes a method and a device for moving, for example, lollipops with a holder to a packaging machine. The lollipop holders are gripped by one of the plurality of gripping elements consisting of a pair of fingers fixed on a rotating portion. The gripping elements then unload the lollipops onto a conveyor belt. However, the device and method are not capable of changing the position of the lollipops from a horizontal, lying position to a vertical, upright position. The device and method described in CN 111,406,822 are also unable to change the position of the confectionery product from a horizontal, lying to a vertical, upright position.

U.S. 9,486,927 describes a robotic gripping system in which the end effector attachment has two gripping elements at the end of the robotic arm, each gripping element having two fingers and being fastened to a rotating shaft. Such a gripping system is capable of changing the position of the lollipops from a horizontal, lying to a vertical, upright position. However, the gripping elements are not suitable for gripping the fragile chocolate portion of the confectionery product without causing damage to it.

The devices described in DE102007031847 and WO2020127562 are capable of moving fragile or elongated products, however, they are not suitable for positioning these products upright in a display.

Until now, the upright packaging of these fragile confectionery products in a display has therefore mainly remained a manual task.

The present invention aims to find a solution for at least some of the above problems.

### SUMMARY OF THE I NVENTI ON

The invention relates to a method according to claim 1. In particular, the present invention describes a method for packaging a confectionery product in a display by means of an automated gripping system, wherein the confectionery product comprises a holder and a chocolate portion, the holder contained at least partly in the chocolate portion and wherein the gripping system comprises a gripping element and a suction cup suitable for gripping supplied confectionery products, wherein the holder of the confectionery product is gripped by means of the gripping element of the gripping system and the chocolate portion of the confectionery product is gripped by means of the suction cup of the gripping system and the holder of the confectionery product is then placed in an opening provided for this purpose in the display. Preferred embodiments of this method are set forth in claims 2-7.

In a second aspect, the invention relates to a device according to claim 8. In particular, the present invention describes a device for packaging confectionery products, said confectionery product comprising a holder and a chocolate portion, wherein the device comprises supply means for supplying confectionery products and a robotic device for moving confectionery products to a display, wherein the robotic device is provided with one or more robotic arms, wherein the end of the one or more robotic arms is provided with a gripping system, the gripping system comprising a gripping element and a suction cup for gripping the confectionery product and a pushing element for inserting the confectionery product into a display. Preferred embodiments of this device are shown in claims 9-11.

### BRI EF DESCRIPTION OF THE FIGURES

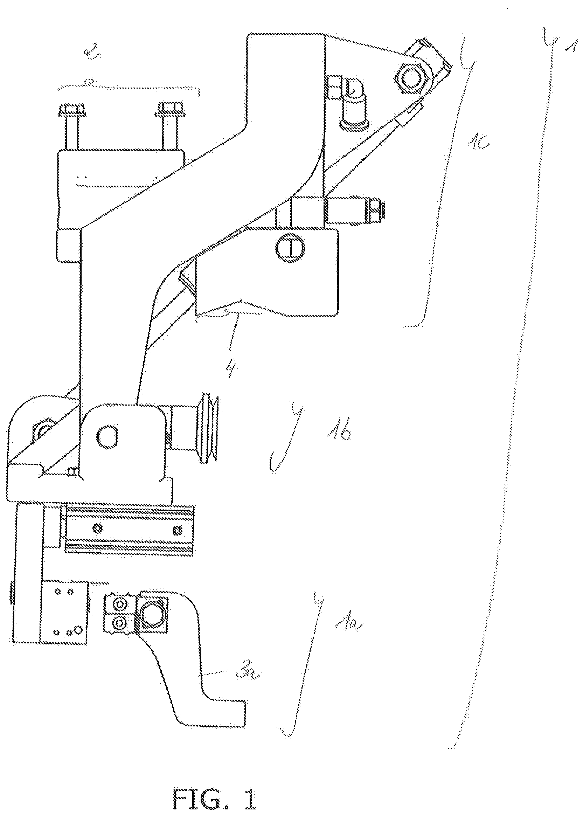

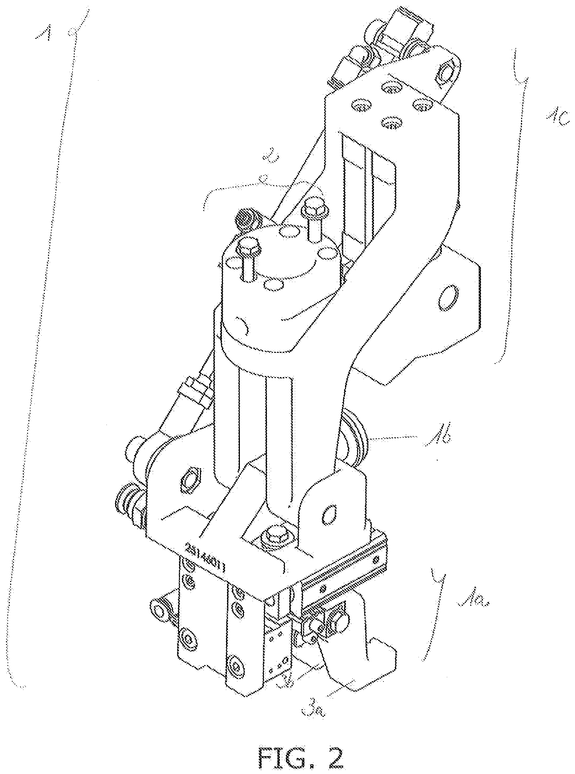

Figures 1 and 2 show embodiments of the gripping system of the device according to the present invention.

### DETAI LED DESCRIPTION OF THE INVENTION

Despite the many applications of robotic arms, there is still a need for an automated method and device that is able to move fragile items, such as confectionery products with a holder and a fragile chocolate portion. Furthermore, in order to positively influence the customer's purchasing behavior, it is important that these confectionery products are presented upright in a display. Current automated methods and devices are not suitable for upright packaging of these fragile confectionery products. There is a need for an automated method and device that makes it possible to pack fragile confectionery products upright in a display.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise", "comprising", "consist of", "consisting of", "provided with", "have", "having", "include", "including", "contain", "containing" are synonyms and are inclusive or open terms that indicate the presence of what follows, and which do not exclude or prevent the presence of other components, characteristics, elements, members, steps, as known from or disclosed in the prior art.

The use of robotic arms is used in various industries, mainly because they increase the efficiency of the production process and thus reduce labor costs. The widespread use of robotic arms is largely due to their versatility to perform various tasks. This versatility is achieved through the use of specific end effector attachments, such as grippers or tools that are mounted on the end of the robotic arm, these end effector attachments being designed to perform specialized tasks.

In a first aspect, the invention relates to a method for packaging a confectionery product in a display by means of an automated gripping system, wherein the confectionery product comprises a holder and a chocolate portion, the holder contained at least partly in the chocolate portion and wherein the gripping system comprises a gripping element and a suction cup suitable for gripping supplied confectionery products, wherein the holder of the confectionery product is gripped by means of the gripping element of the gripping system and the chocolate portion of the confectionery product is gripped by means of the suction cup of the gripping system and the holder of the confectionery product is then placed in an opening provided for this purpose in the display.

In a second aspect, the invention relates to a device for packaging confectionery products, said confectionery product comprising a holder and a chocolate portion, wherein the device comprises supply means for supplying confectionery products and a robotic device for moving confectionery products to a display, wherein the robotic device is provided with one or more robotic arms, wherein the end of the one or more robotic arms is provided with a gripping system, the gripping system comprising a gripping element and a suction cup for gripping the confectionery product and a pushing element for inserting the confectionery product into a display.

The presentation of a confectionery product often has a major influence on the purchasing behavior of the consumer. For confectionery products with a holder and a chocolate portion, such as chocolate lollipops, it is important that they are presented upright, so that the appearance of the confectionery product, especially the chocolate portion, is fully appreciated.

"Holder" in this document refers to a longitudinal element extending in the longitudinal direction of the confectionery product. In a preferred embodiment, the holder will be a rod, straw, or stick. The holder can have a circular, oval, rectangular or square shape. In another embodiment, the holder is a flat stick. The holder can be made of plastic, cardboard, paper, or wood.

By packaging the confectionery products in a display, they can on the one hand be presented upright (by anchoring the holder in the display) and, because the display only covers a part of the holder, the most important part of the confectionery product, being the chocolate portion, is optimally visible. This is advantageous, as it can attract the buyer's attention, for example when the display with the confectionery products is displayed on a counter of a sales outlet, such as a shop or a bakery.

By gripping the holder of the confectionery product by means of the gripping element of the gripping system and grasping the chocolate portion of the confectionery product by means of the suction cup of the gripping system, the present method makes it possible to securely enclose the confectionery product in such a way that it can be moved. By fixing both the holder and the chocolate portion of the confectionery product, the confectionery product can be transported in a safe manner. The use of two different fixing points namely increases the strength of the connection between the confectionery product and the gripping system, in such a way that the confectionery product cannot loosen and fall. By using a suction cup to fix the chocolate portion, the force exerted on the chocolate portion is well dosed and the chocolate portion will not break during the movement to the display, and it is possible to exert a greater force on the holder when placing the confectionery product in the display.

In one embodiment, the chocolate portion of the confectionery product is multi-layered, provided with a base layer of chocolate and one or more secondary colors. In one embodiment, the chocolate portion of the confectionery product is provided with a pad print.

In one embodiment, the confectionery product is manufactured in a mold or an injection mold in which a recess is provided for receiving the holder of the confectionery product. The injection mold is preferably made of silicone or a plastic material such as polypropylene or polyethylene. In a preferred form, the holder is placed in the recess of the mold during the preparation of the confectionery product. In a preferred embodiment, a distal portion of the holder is herein provided in the internal volume of the mold. This will cause an anchoring of the holder in the chocolate portion to occur. Indeed, as soon as the mold is filled internally with chocolate, this distal portion of the holder will be immersed in it. When the chocolate solidifies, a temporary fixed connection will arise between the chocolate portion and the holder.

In one embodiment, the confectionery product is surrounded by a casing, as a result of which the suction cup does not make direct contact with the chocolate portion. In a preferred embodiment, only the chocolate portion is surrounded by a casing. In a further embodiment, the chocolate portion of the confectionery product is completely enclosed by the casing. In one embodiment, the casing comprises a thermoplastic material. In a further embodiment, the thermoplastic
material is selected from coex polypropylene, coated polypropylene, metallized polypropylene, polyester, metallized polyester, or polyethylene.

The casing protects the confectionery product when handling the product by means of the suction cup. Furthermore, this enveloped confectionery product is protected against infestation by flies, moths, or other pest insects in the food. Such packaging offers the advantage that these products are suitable for export. In a preferred embodiment, the casing is provided with a label and/or an information carrier. The label can contain any information whatsoever, for example the brand name of the confectionery product. The information carrier may also contain any information whatsoever, for example the ingredients list of the confectionery product. This label and/or information carrier can be attached to the casing in any way whatsoever, for instance by means of glue. In a further preferred form, the casing is at least partially transparent, so that the confectionery product is clearly visible, but can also be printed.

In one embodiment, the gripping element of the gripping system comprises two gripping fingers. In another embodiment, the gripping element comprises three gripping fingers. In yet another embodiment, the gripping element comprises four gripping fingers. In yet another embodiment, the gripping element comprises more than four gripping fingers.

In one embodiment, these gripping fingers are movable, allowing them to move away from or towards each other in a particular direction of movement, so as to form an open or a closed position, respectively. This direction of movement can for instance take place along a substantially linear path, such that opposite gripping fingers move towards and away from each other along the substantially linear path. In a preferred embodiment, the holder of the confectionery product is gripped by closing the two or more gripping fingers around the holder. In a preferred embodiment, the holder of the confectionery product is released by opening the two or more gripping fingers around the holder.

In one embodiment, the gripping finger has a recess, making it suitable for enclosing a portion of the holder of the confectionery product when the gripping fingers are in a closed position. In one embodiment, the gripping finger comprises a gripping surface. The gripping surface may take various forms and may contain adhesive and/or non-adhesive elements. Furthermore, the gripping surface (or the gripping finger in general, for that matter) can be compliant, which means that the surface (or at least part of the finger) can be arranged in such a way that it forms to the contour of the holder, which could prevent the holder from slipping away and/or offer other advantages during the manipulation of the holder. In one embodiment, the gripping finger has one or more curved surfaces, although other shapes are also possible, such as flat surfaces. In another embodiment, the gripping surface has a dimpled pattern of compliant urethane pads or a similar compliant material.

In a preferred embodiment, the gripping system is provided on a robotic arm. The connection between the robotic arm and the gripping system can be established in various ways. In a preferred embodiment, the gripping system is secured to the robotic arm by means of a screw system. In one embodiment, the gripping system is connected to the base plate at the end of the robotic arm.

The robotic arm is suitable for moving the gripping system in different directions and according to different movements. In a preferred embodiment, the robotic arm and the gripping system provided thereon are automated and the various movements to be carried out are pre-programmed. The robotic arm with the gripping system can therefore carry out the packaging process completely autonomously, so that no human intervention is necessary. This increases the efficiency of the packaging process.

The robotic arm is part of a robotic device. Such a robotic device can be provided with one or more robotic arms. In one embodiment, the robotic device comprises various subsystems, such as a mechanical system, a detection system, a control system, as well as a power supply. The robotic device may include more or less subsystems and each of the subsystems may include multiple elements. In a preferred embodiment, each of the subsystems and elements of the robotic device can be interconnected.

In a preferred embodiment, in addition to the robotic arm and the gripping system, the mechanical system also comprises a motor. The motor may be an electric motor powered by an electrical power or may be powered by a number of different energy sources, such as a gas-based fuel or solar energy. In addition, the motor can be configured to receive power from a power supply. The power supply may supply power to various components of the robotic device and could represent, for example, a rechargeable lithium-ion or lead-acid battery. Other power supply materials and types are also possible.

The detection system of the robotic device may use one or more sensors. In one embodiment, sensors are located near the robotic arm. In one embodiment, sensors are located near the gripping system. In one embodiment, these sensors comprise force or torque sensors which can be mounted on the robotic arm and/or the gripping system and thereby sense forces/torques experienced by the robotic arm and/or by one or more gripping fingers of the gripping element of the gripping system. Additionally or alternatively, in one embodiment, these sensors may include cameras configured to record images of the environment of the robotic device. Additionally or alternatively, in one embodiment, these sensors may include 2D sensors and/or 3D depth sensors that sense information about the environment as the robotic arm and/or gripping system moves.

In one embodiment, the detection system collects information about the environment that can be used by the control system to navigate the robotic arm and/or the gripping system through the workplace to a position for picking up and efficiently moving the confectionery product. In one embodiment, the control system comprises a computer with motion planning software. In one embodiment, the control system is located on the robotic device. In another embodiment, the control system communicates remotely with the robotic device.

In one embodiment, many or all of the operations of the robotic device are controlled by a control system. In one embodiment, the control system comprises at least one processor that executes instructions stored in a non-temporary computer-readable medium, such as a memory.

In a preferred embodiment, the memory comprises instructions executable by the processor to perform various operations of the robotic device. The memory may also include additional instructions, including instructions to send data to, receive data from, interact with and/or control the mechanical system, the detection system and/or the control system.

In addition to a robotic device with one or more robotic arms with the aforementioned gripping system mounted thereon, the device according to the present invention also comprises supply means for supplying confectionery products. In a preferred embodiment, the confectionery products are supplied by means of a conveyor belt.

In a preferred embodiment, the confectionery product is supplied lying on a conveyor belt, gripped, and moved to the display by means of the robotic arm. In a preferred embodiment, the confectionery product is rotated during movement from a horizontal (lying) position to a vertical (upright) position. This rotation of approximately 90° is performed by means of the robotic arm on which the gripping system is mounted. In one embodiment, the robotic arm is controlled by the control system of the robotic device. In one embodiment, the control system includes a computer with motion planning software that can program and store the specific motions of the robotic arm in the memory. The control system comprises at least one processor which executes instructions which are stored in the memory. By rotating the confectionery product from a horizontal position to a vertical position, the confectionery product can be supplied lying on the conveyor belt and then placed upright in a display by means of the movement of the robotic arm. As mentioned above, presenting the confectionery product upright offers the advantage that the chocolate portion is optimally visible.

The holder of the confectionery product makes it possible to present it upright in such a way that the chocolate portion is clearly visible. However, this holder must be anchored in the display in such a way that the confectionery product does not fall over under the weight of the chocolate portion.

According to the invention, the display comprises one or more openings for receiving the holder of the confectionery product and the holder of the confectionery product is inserted into such an opening of the display. In one embodiment, the one or more openings are located on the top surface of the display. In a preferred embodiment, the opening encloses a portion of the holder circumferentially. In a preferred embodiment, the opening therefore has substantially the same shape and dimensions as the cross-section of the holder. As a result, a portion of the holder is surrounded and supported on all sides and the confectionery product remains upright in the display.

According to the second aspect of the invention, the gripping system of the device is further provided with a pushing element. The holder of the confectionery product can be placed in the opening of the display by means of a downward pushing movement by the pushing element. In a preferred embodiment, the pushing element is positioned above the chocolate portion of the confectionery product and the pushing element makes contact with the top of the confectionery product during the downward pushing movement. In one embodiment, the pushing element of the gripping system comprises a notch for receiving the chocolate portion of the confectionery product. The downward pushing movement moves the entire confectionery product downwards and the holder will be inserted into an opening of the display. After the insertion of the holder into an opening of the display, the pushing element will return to its starting position by means of an upward movement. In one embodiment, the pushing element is controlled by the control system of the robotic device, which can cause the pushing element to move downwards or upwards.

In one embodiment, after the insertion of the holder into the opening of the display, the confectionery product is disconnected from the gripping system, on the one hand by releasing the chocolate portion by the suction cup and on the other by releasing the holder by means of the opening of the fingers of the gripping element. In this way any connection between the confectionery product and the gripping system is broken and the confectionery product is firmly placed in the display.

The basis of vacuum technology is the pressure difference between the environment and a closed space, such as in a suction cup or vacuum chamber. This allows products to be picked up and moved.

This requires that a pressure difference be created between the space under the suction cup and the environment. The suction cup provides the seal, so that the pressure difference remains. This seal is essential. The choice of shape, material and design are of great importance to achieve the intended results, such as speed and reliability, during the packaging process.

The suction cup can be made of any material known in the art, such as nitrile, urethane, or silicone. In one embodiment, the suction cup is made of silicone. The suction cup can be of any shape. Examples are, for example, flat suction cups, bellows suction cups and elongate suction cups. In a preferred embodiment, the suction cup has a round shape. The suction cup can be of any size. In a preferred embodiment, the suction cup is smaller than the chocolate portion of the confectionery product. In a preferred embodiment, the suction cup has a diameter between 10 mm and 30 mm, for example 20 mm.

Furthermore, a vacuum source is needed, a mechanism to extract the air from the suction cup. This vacuum source controls the negative pressure.

In one embodiment, the suction cup of the gripping system is controlled by means of a vacuum pump. In another preferred embodiment, the suction cup of the gripping system is controlled by means of a vacuum generator. In a further embodiment, the vacuum source is a single-stage generator. In an alternative embodiment, the vacuum source is a multi-stage generator. In one embodiment, the chocolate portion of the confectionery product is gripped by forming a vacuum under the suction cup. In one embodiment, the vacuum level is between -0.5 bar and -1 bar, preferably between -0.6 bar and -0.9 bar. In one embodiment, the chocolate portion is disconnected by creating a positive air pressure in the suction cup. In one embodiment, the vacuum arrangement is further equipped with monitoring systems, switches, vacuum gauges, and other instruments.

In one embodiment, the confectionery product is packaged in a display by means of the aforementioned method. In one embodiment, the confectionery product is packaged in a multilayer display. In one embodiment, the multilayer display has openings in the different layers for the placement of the holder. In one embodiment, the holder is inserted into two or more superimposed openings of the multilayer display. In one embodiment, the openings for receiving a particular holder are positioned substantially vertically one above the other, such that the holder can be placed vertically in the display and presented in the package in a nice upright position. By providing several layers, in each of which openings are provided for the insertion of the holder, the holder of the confectionery product is surrounded and supported at several points, so that it remains better positioned upright.

In one embodiment, the steps of the present method are repeated, and multiple confectionery products are moved and packaged in one or more displays. Such a display can contain any number of confectionery products. In a preferred embodiment, 24 confectionery products are placed in one display. In a further embodiment, the confectionery products are arranged in the display in 3 rows of 8 confectionery products each. In an alternative embodiment, 18 confectionery products are placed in one display. In a further embodiment, the confectionery products are arranged in the display in 3 rows of 6 confectionery products each.

In a preferred embodiment, the display is provided with a label and/or an information carrier. In a preferred embodiment, the display is made of materials comprising cardboard, paper, light wood and/or plastic. In a preferred embodiment, the selected material is easily foldable, such that the display can be folded in a simple manner.

In what follows, the invention is described by way of non-limiting examples illustrating the invention, and which are not intended to and should not be interpreted as limiting the scope of the invention, which is defined by the appended claims.

### DETAI LED DESCRI PTI ON OF THE FIGURES

**Figure 1** and **Figure 2** show two different views of an embodiment of the gripping system 1 of the device according to the present invention. The gripping system 1 is suitable for packaging a confectionery product (not shown) in a display (not shown). The confectionery product comprises a holder and a chocolate portion. The gripping system is provided on a robotic arm (not shown) and is fastened by means of a screw system 2. This robotic arm is suitable for moving the gripping system in different directions and according to different movements. The robotic arm and the gripping system attached thereto are fully automated. Because the successive movements are pre-programmed, the robotic arm with the gripping system can function completely autonomously and no human intervention is necessary. The gripping system 1 comprises a gripping element 1a suitable for gripping the holder of the confectionery product and a suction cup 1b suitable for grasping the chocolate portion of the confectionery product. In this embodiment, the gripping element comprises two fingers 3a, 3b. By closing the fingers 3a, 3b, the holder of the confectionery product is firmly enclosed, and the confectionery product can be moved safely. Opening the fingers 3a, 3b again ensures that the connection between the holder and the gripping system 1 is broken once the confectionery product has been placed in the display (not shown). The suction cup 1b is able to fix the packaged chocolate portion by forming a vacuum between the suction cup and the packaged chocolate portion. Once the confectionery product has been placed in the display, the suction cup 1b releases the chocolate portion by forming a positive air pressure between the suction cup 1b and the chocolate portion. The controlled build-up of a vacuum and a positive air pressure between the suction cup 1b and the packaged chocolate portion is done by means of a vacuum generator (not shown). The gripping system 1 is further provided with a pushing element 1c. This pushing element 1c is suitable for inserting the holder into an opening of the display(not shown) by means of a downward pushing movement. The pushing element is provided with a notch 4 for receiving the chocolate portion of the confectionery product. The different parts of the gripping system 1, being the gripping element 1a, the suction cup 1b and the pushing element 1c, are controlled by means of the robotic arm (not shown).

## Claims

1. A method for packaging a confectionery product in a display by means of an automated gripping system (1),
wherein the confectionery product comprises a holder and a chocolate portion, the holder contained at least partly in the chocolate portion, **characterized in that** the gripping system (1) comprises a gripping element (1a) and a suction cup (1b) suitable for gripping supplied confectionery products,
wherein the holder of the confectionery product is gripped by means of the gripping element (1a) of the gripping system (1) and the chocolate portion of the confectionery product is gripped by means of the suction cup (1b) of the gripping system (1) and the holder of the confectionery product is subsequently placed in an opening provided for this purpose in the display.

2. The method of claim 1, wherein the gripping system (1) is provided on a robotic arm.

3. The method of claim 2, wherein the confectionery product is supplied lying on a conveyor belt, and after gripping is moved to the display by means of the robotic arm and wherein during the movement the confectionery product is rotated from a horizontal position to a vertical position.

4. The method of any of the preceding claims, wherein the gripping system (1) is further provided with a pushing element (1c) and wherein the placing of the holder of the confectionery product in the display takes place by means of a downward pushing movement by the pushing element (1c) of the gripping system. (1).

5. The method of any of the preceding claims, wherein the gripping element (1a) comprises two or more gripping fingers (3a, 3b) and wherein the holder of the confectionery product is gripped and released respectively by closing and opening the two or more gripping fingers (3a, 3b) around the holder.

6. The method of any of the preceding claims, wherein the confectionery product is packaged in a multilayer display, wherein the layers of the display are provided with openings and wherein the holder is inserted into two or more substantially vertically superimposed openings of the multilayer display.

7. The method of any of the preceding claims, wherein the suction cup (1b) is controlled by means of a vacuum source, wherein the chocolate portion of the confectionery product is respectively gripped and disconnected by forming a vacuum under the suction cup (1b) and forming a positive air pressure in the suction cup (1b).

8. A device for packaging confectionery products, said confectionery product comprising a holder and a chocolate portion, wherein the device comprises supply means for supplying confectionery products and a robotic device for moving confectionery products to a display, wherein the robotic device is provided with one or more robotic arms and wherein the end of said one or more robotic arms is provided with a gripping system (1), **characterized in that** the gripping system (1) comprises a gripping element (1a) and a suction cup (1b) for gripping the confectionery product and a pushing element (1c) for inserting the confectionery product into a display.

9. The device according to claim 8, wherein the gripping element (1a) of the gripping system (1) comprises two or more gripping fingers (3a, 3b).

10. The device according to any of the preceding claims 8-9, wherein the pushing element (1c) comprises a notch (4) for receiving the chocolate portion of the confectionery product.

11. The device according to any of the preceding claims 8-10, wherein the suction cup (1b) of the gripping system is controlled by means of a vacuum source.

## Patentansprüche

1. Verfahren zum Packen eines Süßwarenprodukts in einen Ausstellungsständer mit Hilfe eines automatischen Greifsystems (1), wobei das Süßwarenprodukt einen Halter und einen Schokoladenteil umfasst, wobei der Halter zumindest teilweise in dem Schokoladenteil enthalten ist, **dadurch gekennzeichnet, dass** das Greifsystem (1) ein Greifelement (1a) und einen Saugnapf (1b) umfasst, die geeignet sind, zugeführte Süßwarenprodukte zu greifen, wobei der Halter des Süßwarenprodukts mit Hilfe des Greifelements (1a) des Greifsystems (1) ergriffen wird und der Schokoladenteil des Süßwarenprodukts mit Hilfe des Saugnapfs (1b) des Greifsystems (1) ergriffen wird und der Halter des Süßwarenprodukts dann in einer Öffnung platziert wird, die zu diesem Zweck in dem Ausstellungsständer bereitgestellt ist.

2. Verfahren nach Anspruch 1, wobei das Greifsystem (1) an einem Roboterarm bereitgestellt ist.

3. Verfahren nach Anspruch 2, wobei das Süßwarenprodukt auf einem Förderband liegend zugeführt wird und nach dem Greifen mit Hilfe des Roboterarms zu dem Ausstellungsständer bewegt wird und wobei das Süßwarenprodukt während der Bewegung von einer horizontalen Position in eine vertikale Position gedreht wird.

4. Verfahren nach einem der vorhergehenden Ansprüche, wobei das Greifsystem (1) ferner mit einem Schiebeelement (1c) versehen ist und wobei das Platzieren des Halters des Süßwarenprodukts in dem Ausstellungsständer mit Hilfe einer Abwärtsschiebebewegung durch das Schiebeelement (1c) des Greifsystems (1) erfolgt.

5. Verfahren nach einem der vorhergehenden Ansprüche, wobei das Greifelement (1a) zwei oder mehr Greiffinger (3a, 3b) umfasst und wobei der Halter des Süßwarenprodukts durch Schließen und Öffnen der zwei oder mehr Greiffinger (3a, 3b) um den Halter ergriffen beziehungsweise losgelassen wird.

6. Verfahren nach einem der vorhergehenden Ansprüche, wobei das Süßwarenprodukt in einen mehrlagigen Ausstellungsständer gepackt wird, wobei die Lagen des Ausstellungsständers mit Öffnungen versehen sind und wobei der Halter in zwei oder mehr im Wesentlichen vertikal übereinanderliegende Öffnungen des mehrlagigen Ausstellungsständers eingesetzt wird.

7. Verfahren nach einem der vorhergehenden Ansprüche, wobei der Saugnapf (1b) mit Hilfe einer Unterdruckquelle gesteuert wird, wobei der Schokoladenteil des Süßwarenprodukts durch Bilden eines Unterdrucks unter dem Saugnapf (1b) und Bilden eines Luftüberdrucks in dem Saugnapf (1b) ergriffen beziehungsweise freigegeben wird.

8. Vorrichtung zum Packen von Süßwarenprodukten, wobei das Süßwarenprodukt einen Halter und einen Schokoladenabschnitt umfasst, wobei die Vorrichtung Zufuhrmittel zum Zuführen von Süßwarenprodukten und eine Robotervorrichtung zum Bewegen von Süßwarenprodukten zu einem Ausstellungsständer umfasst, wobei die Robotervorrichtung mit einem oder mehreren Roboterarmen versehen ist und wobei das Ende des einen oder der mehreren Roboterarme mit einem Greifsystem (1) versehen ist, **dadurch gekennzeichnet, dass** das Greifsystem (1) ein Greifelement (1a) und einen Saugnapf (1b) zum Ergreifen des Süßwarenprodukts und ein Schiebeelement (1c) zum Einsetzen des Süßwarenprodukts in einen Ausstellungsständer umfasst.

9. Vorrichtung nach Anspruch 8, wobei das Greifelement (1a) des Greifsystems (1) zwei oder mehr Greiffinger (3a, 3b) umfasst.

10. Vorrichtung nach einem der vorhergehenden Ansprüche 8 bis 9, wobei das Schiebeelement (1c) eine Aussparung (4) zum Aufnehmen des Schokoladenabschnitts des Süßwarenprodukts umfasst.

11. Vorrichtung nach einem der vorhergehenden Ansprüche 8 bis 10, wobei der Saugnapf (1b) des Greifsystems mit Hilfe einer Unterdruckquelle gesteuert wird.

## Revendications

1. Procédé d'emballage d'un produit de confiserie dans un présentoir au moyen d'un système de préhension automatisé (1), dans lequel le produit de confiserie comprend un support et une portion de chocolat, le support étant contenu au moins en partie dans la portion de chocolat, **caractérisé en ce que** le système de préhension (1) comprend un élément de préhension (1a) et une ventouse (1b) adaptés à la préhension de produits de confiserie fournis, dans lequel le support du produit de confiserie est saisi au moyen de l'élément de préhension (1a) du système de préhension (1) et la portion de chocolat du produit de confiserie est saisie au moyen de la ventouse (1b) du système de préhension (1) et le support du produit de confiserie est ensuite placé dans une ouverture prévue à cet effet dans le présentoir.

2. Procédé selon la revendication 1, dans lequel le système de préhension (1) est monté sur un bras robotisé.

3. Procédé selon la revendication 2, dans lequel le produit de confiserie est fourni posé sur une bande transporteuse et, après avoir été saisi, est déplacé vers le présentoir au moyen du bras robotisé, et dans lequel, pendant le mouvement, le produit de confiserie est tourné d'une position horizontale à une position verticale.

4. Procédé selon l'une quelconque des revendications précédentes, dans lequel le système de préhension (1) est en outre pourvu d'un élément de poussée (1c) et dans lequel le placement du support du produit de confiserie dans le présentoir s'effectue au moyen d'un mouvement de poussée vers le bas par l'élément de poussée (1c) du système de préhension (1).

5. Procédé selon l'une quelconque des revendications précédentes, dans lequel l'élément de préhension (1a) comprend deux doigts de préhension (3a, 3b) ou plus et dans lequel le support du produit de confiserie est saisi et libéré respectivement par la fermeture et l'ouverture des deux doigts de préhension (3a, 3b) ou plus autour du support.

6. Procédé selon l'une quelconque des revendications précédentes, dans lequel le produit de confiserie est emballé dans un présentoir multicouche, dans lequel les couches du présentoir sont pourvues d'ouvertures et dans lequel le support est inséré dans deux ouvertures ou plus sensiblement superposées verticalement du présentoir multicouche.

7. Procédé selon l'une quelconque des revendications précédentes, dans lequel la ventouse (1b) est commandée au moyen d'une source de vide, dans lequel la portion de chocolat du produit de confiserie est respectivement saisie et détachée en formant un vide sous la ventouse (1b) et en formant une pression d'air positive dans la ventouse (1b).

8. Dispositif d'emballage de produits de confiserie, ledit produit de confiserie comprenant un support et une portion de chocolat, dans lequel le dispositif comprend des moyens d'approvisionnement pour fournir des produits de confiserie et un dispositif robotisé pour déplacer des produits de confiserie vers un présentoir, dans lequel le dispositif robotisé est pourvu d'un ou de plusieurs bras robotisés et dans lequel l'extrémité dudit ou desdits bras robotisés est dotée d'un système de préhension (1), **caractérisé en ce que** le système de préhension (1) comprend un élément de préhension (1a) et une ventouse (1b) pour saisir le produit de confiserie et un élément de poussée (1c) pour insérer le produit de confiserie dans un présentoir.

9. Dispositif selon la revendication 8, dans lequel l'élément de préhension (1a) du système de préhension (1) comprend deux doigts de préhension (3a, 3b) ou plus.

10. Dispositif selon l'une quelconque des revendications précédentes 8 et 9, dans lequel l'élément de poussée (1c) comprend une encoche (4) pour recevoir la portion de chocolat du produit de confiserie.

11. Dispositif selon l'une quelconque des revendications précédentes 8 à 10, dans lequel la ventouse (1b) du système de préhension est commandée au moyen d'une source de vide.
